# NEUE EUROPÄISCHE PATENTSCHRIFT

(11) **EP 0 759 711 B2**
(45) Veröffentlichungstag und Bekanntmachung des Hinweises auf die Entscheidung über den Einspruch: **11.05.2005**
(45) Hinweis auf die Patenterteilung: 02.09.1998
(21) Anmeldenummer: 95916657.0
(22) Anmeldetag: 14.04.1995
(51) Int. Cl.: A46B 3/04, A46D 3/00

(54) **VERFAHREN ZUR HERSTELLUNG VON BORSTENWAREN IM WEGE DES SPRITZGIESSENS**
PROCESS FOR THE MANUFACTURE OF BRUSHES BY INJECTION MOULDING
PROCEDE DE FABRICATION DE BROSSES PAR MOULAGE PAR INJECTION

(30) Priorität: 05.05.1994 DE 4415886
(43) Veröffentlichungstag der Anmeldung: 05.03.1997
(73) Patentinhaber: CORONET-WERKE GmbH, 69479 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: PCT/EP1995/001408
(87) Internationale Veröffentlichungsnummer: WO 1995/030350

(56) Entgegenhaltungen:
- EP-A- 0 142 885
- EP-A1- 0 326 634
- EP-A1- 1 110 478
- EP-A2- 0 150 785
- WO-A1-00/74917
- DE-A- 3 832 520
- DE-U- 9 206 990
- US-A- 2 643 158
- Konstruieren mit Kunststoffen, Gunter Erhard, 1993, S 148
- Kunstoff Lexikon, 1998, Seiten 105, 140

## Beschreibung

Die Erfindung betrifft ein Verfahren gemäß dem Oberbegriff des Anspruchs 1.

Seit der Verwendung von Kunststoffen sowohl für die Borsten als auch den Borstenträger von Borstenwaren, sind viele Versiche unternommen worden, die früher mechanische Befestigung der Borstenbündel am Borstenträger durch eine form- oder stoffschlüssige Verbindung ohne weitere mechanische Befestigungsmittel zu ersetzen. Hierzu zählt vor allem das sogenannte Einspritzen, bei dem die Bündelenden durch Umspritzen mit der Kunststoffschmelze für den Borstenträger eingebettet und am Borstenträger befestigt werden.

Ein wesentliches Qualitätsmerkmal für Borstenwaren ist die Auszugsfestigkeit der einzelnen Borsten bzw. der Bündel, d.h. die Borsten müssen so in der Kunststoffmasse des Borstenträgers eingebettet sein, daß sie sich unter den bei Gebrauch wirkenden Kräften nicht lösen. Unter den bekannten Spritzgießverfahren haben sich deshalb nur solche als tauglich erwiesen, bei denen an den in der Spritzgießform liegenden Bündelenden eine Verdickung vorgesehen wird, die nach dem Umspritzen mit der Kunststoffmasse des Borstenträgers eine Art Anker bildet und zudem die Borsten an ihrem befestigungsseitigen Ende miteinander verbindet, so daß an dem Bündel oder auch nur an einzelnen Borsten wirksame Auszugskräfte in die Verdickung eingeleitet und von deren Einspannung im Borstenträger aufgenommen werden.

Die bekannten Verfahren verwenden sämtlich Spritzgießformen, bei denen die eine Formhälfte mit einer dem Borstenbesatz entsprechenden Anzahl von Kanälen versehen ist, durch die die Borstenbündel soweit zugeführt werden, daß die Bündelenden in den Formraum hineinragen. Die Borstenenden des Bündels werden dann entweder durch einen eine Verdickung bildenden Kleber miteinander verbunden (FR 1 453 829 /Piotrowski) oder -soweit sie aus Kunststoffmonofilen bestehen- aufgeschmolzen, wobei die Schmelze zu einer Verdickung erstarrt, die einen größeren Querschnitt als das Bündel aufweist (DE 845 933 / Schiffer).

Es liegt auf der Hand, daß die Auszugsfestigkeit der Borsten umso größer ist, je größer die Einbettungslänge des Bündels im Borstenträger ist. Dem laufen aber folgende Forderungen zuwider: Es ist sowohl bei den Borsten, die in der Regel aus höherwertigen Kunststoffen, wie Polyamiden bestehen, als auch beim Borstenträger der Materialeinsatz so gering als möglich zu halten, was durch entsprechend kurze Einspannung der Borsten zu verwirklichen wäre. Es gibt ferner Borstenwaren, bei denen der Borstenträger aus gebrauchstechnischen Gründen eine möglichst geringe Wandstärke aufweisen sollte. Dies gilt beispielsweise für Zahnbürsten, um wegen der beengten Verhältnisse in der Mundhöhle eine einschließlich der Borstenlänge möglichst kurzbauende Ausführung zu gewährleisten.

Eine Minimierung der Einspannlänge der Borsten wird bei einem bekannten Verfahren (EP 0 142 885 /Anchor) dadurch erreicht, daß die durch Aufschmelzen der Borstenenden erhaltenen Verdickungen durch den Spritzdruck beim Einspritzen der Kunststoffschmelze des Borstenträgers an die Mündung des das Bündel führenden Kanals gedrängt werden soll, so daß die Einspannlänge praktisch auf die Stärke der Verdickung reduziert ist und die Verankerung des Bündels ausschließlich durch die in den schmalen Spalt zwischen Verdickung und Formwandung eindringende Kunststoffmasse des Borstenträgers erreicht werden soll. Mit diesem bekannten Verfahren wird gleichzeitig das Ziel verfolgt, den Kanal mittels der Verdickung abzudichten, um zu verhindern, daß die eingespritzte Kunststoffschmelze am Rande des Bündels oder zwischen den Borsten austreten kann (Überspritzen) und an der fertigen Bürste zu Graten oder aber zumindest zu einem unschönen Erscheinungsbild führt. Auch würde dadurch das Biegeverhalten der Borsten im Ansatzbereich am Borstenträger unregelmäßig beeinflußt. Dieses Verfahren kann jedoch aus mehreren Gründen nicht befriedigen. Zum einen ist das Anspressen der Verdikkung an den Bündelkanal nicht mit Sicherheit und vor allem nicht reproduzierbar gewährleistet, vielmehr kann je nach Führung der Spritzgießmasse innerhalb der Form, je nach Querschnitt der Verdickung, insbesondere des Überstandes der Verdickung über den Bündeldurchmesser, die Verdickung auch innerhalb der Schmelze aufschwimmen, das Bündel also teilweise aus dem Kanal heraus in die Schmelze hineingezogen werden, so daß weder der Abdichtungseffekt erreicht wird, noch eine gleichmäßige Nutzungslänge außerhalb des Borstenträgers gegeben ist. Auch ist die Auszugsfestigkeit des Mündels nicht befriedigend, da der dünne Materialsteg, der die Verdickung übergreift, eine nur mäßige Scherfestigkeit besitzt.

Die Nachteile dieses Verfahrens werden zumindest teilweise durch ein anderes bekanntes Verfahren (EP 0 326 634 / Coronet) behoben, indem auf die Bündel nach dem Ausbilden der Verdickung eine Zugkraft zur Wirkung gebracht wird, die die Verdickung gegen die Mündung des Kanals abdichtet. Auf diese Weise ist eine kürzestmögliche und für alle Bündel gleiche Einbettungslänge gegeben und kommt es nicht zum sogenannten Überspritzen (Eindringen von Kunststoffmasse in den Kanal sowohl zwischen den Bündeln, als auch am äußeren Bündelumfang). Es bleibt aber die mäßige Scherfestigkeit an der Einspannung der Verdickung.

Bei einem weiteren bekannten Verfahren (DE 1 050 304 / Beck) soll das Überspritzen dadurch vermieden werden, daß sämtliche Borsten des Besatzes einer Borstenware zu einem einzigen Paket zusammengefaßt und am befestigungsseitigen Ende eine Platte angeformt wird, die nur randseitig von der Kunststoffmasse des Borstenträger hintergriffen wird. Diese Ausführung mag bei Pinseln, Malerbürsten oder dergleichen, bei denen es nicht auf die Wirkung einer Vielzahl kleiner Bündel ankommt, sinnvoll sein. Damit ergibt sich aber eine Beschränkung dieses Verfahrens auf spezielle Borstenwaren. Im übrigen ist aber auch hier der zur Verankerung zur Verfügung stehende Querschnitt sehr klein, so daß dessen Scherfestigkeit üblichen Beanspruchungen nicht genügen kann.

Es hat sich bei den bekannten Verfahren, die an sich die besten Ergebnisse erwarten ließen (EP 0 142 885 und EP 0 326 634), gezeigt, daß neben den bereits genannten Nachteilen danach hergestellte Borstenwaren, insbesondere Zahnbürsten, andere unerwartete Qualitätsmängel aufweisen. So kommt es -spätestens nach einiger Gebrauchszeitzum Aufspreizen der Bündel und zu einer merklichen Verschlechterung des Wiederaufrichtvermögens der Borsten, d.h. die Biegefestigkeit der einzelnen Borste wird bei diesem Verfahren offenbar reduziert, was bei einer größeren Einbettungslänge hingegen nicht zu beobachten ist. Dort (DE 845 993, FR 1 453 829) kommt es aber neben dem nachteilig hohen Materialeinsatz zu anderen nachteiligen Effekten. Beispielsweise zeigt sich gelegentlich nach dem Entformen, daß die Bündel nicht parallel zueinander bzw. senkrecht zur befestigungsseitigen Oberfläche des Borstenträgers stehen, sondern gegenüber ihrer Sollposition verkippt sind oder sind die Borsten in dem Bereich in dem sie eingebettet sind, verkrümmt.

Bei einer aus gebrauchstechnischen Gründen zu bevorzugenden größeren Einbettungslänge, muß das Überspritzen und die dadurch bedingte Gratbildung verhindert werden. Es sind deshalb auch bei diesem Verfahren schon Dichtungsmaßnahmen vorgeschlagen worden, indem beispielsweise in das im Kanal befindliche Bündel ein Dorn eingetrieben wird, um die Borsten im Kanal dicht zu verpressen (DE 38 32 520 / Schiffer). Bei einem anderen Verfahren (DE 2 922 877 / Zahoransky) verengt sich der Kanal zum Formraum hin und werden die Bündel in die Verengung hineingedrückt. Außerdem soll der Kanal von außen her mit Druckluft beaufschlagt werden.

Bei allen bekannten Verfahren, die mit zusätzlichen Abdichtungsmaßnahmen arbeiten, auch dann, wenn sie zu einer an sich wünschenswerten größeren Einspannlänge führen, werden jedoch weiterhin Qualitätsmängel am Produkt beobachtet. An der Oberfläche des Borstenträgers zeigen sich im Ansatzbereich der Borstenbündel Überspritzungen und Unebenheiten, insbesondere in Form von Massespitzen, Spalten und Kavernen und dadurch bedingt Grate und Kanten. Im Schnitt zeigen sich gelegentlich Lunker. Diese Oberflächendefekte sind insbesondere bei Zahnbürsten wegen möglicher Schädigung der Schleimhäute, aber auch bei Körperbürsten unerwünscht. Zahnbürsten oder Körperbürsten mit diesen Mängeln genügen auch nicht den hygienischen Anforderungen, da es zu unerwünschten Ablagerungen, insbesondere zum Einnisten und zur Vermehrung von Bakterien kommt. Schließlich wird hierdurch wiederum die Auszugsfestigkeit beeinträchtigt.

Der Erfindung liegt die Aufgabe zugrunde, ein Verfahren gemäß dem Oberbegriff des Anspruchs 1 dahingehend weiterzuentwickeln, daß bei geringstmöglichem Materialeinsatz eine ausreichende Auszugsfestigkeit der Bündel wie auch der einzelnen Borsten erreicht wird, die Biegeelastizität und das Wiederaufrichtvermögen der Borsten erhalten bleibt und eine einwandfreie Oberfläche am Borstenträger im Ansetzbereich erhalten wird. Ferner soll eine diesen Anforderungen genügende Borstenware bereitgestellt werden.

Die Erfindung geht von der an sich bekannten Erkenntnis aus, daß die durch Verstrecken und thermisches Stabilisieren der Monofile gewonnene Biegefestigkeit bzw. Biegeelastizität (Wiederaufrichtvermögen) der Borsten durch das Aufschmelzen der Borstenenden anläßlich der Bildung der Verdickung beeinträchtigt wird. Es kommt im unmittelbaren Ansatzbereich der Borsten an der Verdickung offenbar zu einer molekularen Reorientierung und damit in diesem Bereich zu einer Verschlechterung des Biegeverhaltens der einzelnen Borste, aber auch zu einer Abnahme der Zugfestigkeit. Ersteres dürfte bei den bekannten Verfahren mit Abdichten der Verdickung am Kanal zum Aufspreizen der Bündel führen. Durch das erfindungsgemäße Verfahren wird bei geringstmöglichem Materialeinsatz für Borsten und Borstenträger der thermisch geschwächte Bereich der Borsten eingebettet, so daß die Borsten auf ihrer freien Länge außerhalb des Borstenträgers ihre durch die Verstreckung und thermische Stabilisierung aufgeprägten Eigenschaften in vollem Umfang beibehalten. Auch die Auszugsfestigkeit der einzelnen Borste wird verbessert, da der geschwächte Bereich eingespannt ist.

Die beim Aufschmelzen des Bündels thermisch geschädigte Länge hängt von mehreren Faktoren ab, insbesondere von der Höhe der Schmelztemperatur und der Dauer der Wärmeeinwirkung, von der Art des Kunststoffs und vom Monofildurchmesser. Die tatsächlich geschädigte Länge läßt sich problemlos an einem einzelnen Bündel in einem Vorversuch durch Aufschmelzen des Bündelendes und einige Biegewechselbeanspruchungen feststellen, so daß die notwendige Einbettungslänge für das herzustellende Produkt für das Spritzgießverfahren festgelegt werden kann.

Wie oben angedeutet, ist die Erkenntnis der thermischen Schädigung der Borsten, wenn auch in anderem Zusammenhang, nämlich dem Verschweißen von Borsten und Borstenträgern bekannt (DE 9 206 990 U1 /Bickel). Ihr wird durch eine komplizierte Konstruktion der Bürste Rechnung getragen, indem der Bürstenkörper auf der Borstenseite mit einer Vertiefung versehen wird. Die Borsten werden auf eine dünne Kunststoffplatte aufgeschweißt, die in die Vertiefung eingesetzt und von einer über die Bündel gefädelten Lochplatte abgedeckt wird. In den Löchern der Platte sollen die Bündel seitlich abgestützt werden.

Schließlich sind noch gesonderte Teile zum Verspannen der Lochplatte und der Bündelplatte mit dem Bürstenkörper notwendig. Eine solche Bürste läßt sich weder zu vertretbaren Kosten herstellen, noch entspricht sie wegen ihrer Kanten und Spalten den physiologischen und hygienischen Anforderungen bei Zahn- oder Körperbürsten. Das Problem der Auszugsfestigkeit der Einzelborsten kann damit im übrigen nicht gelöst werden.

Bei dem erfindungsgemäßen Verfahren wird der thermisch geschädigte Bereich ausschließlich durch Umschließen mit dem Kunststoff des Borstenträgers eingebettet. Die Einbettungslänge der Bündel wird durch den Abstand der Verdickung von der Mündung des Kanals bestimmt. Dieser Abstand muß aber erfindungsgemäß eine weitere Bedingung erfüllen; er muß nämlich mindestens so groß sein, daß die beim Spritzvorgang im Formraum verdrängte Luft, die bevorzugt in Vertiefungen, Spalten etc. und damit auch bevorzugt hinter die Verdickung am Borstenbündel wandert, durch den Kanal gegebenenfalls auch zwischen den Borsten entweichen kann, da sie vermutlich für die bei den bekannten Verfahren beobachteten Kavernen, Lunker etc. am Bündelansatz verantwortlich ist. Gleiches gilt für eventuelle Entgasungsprodukte der Schmelze ("Kunststoff-Lexikon" 6. Auflage, Carl Hanser Verlag). Mit dem erfindungsgemäßen Verfahren werden also auch diese Nachteile beseitigt. Auf der anderen Seite darf der Abstand der Verdickung von der Mündung des Kanals nicht so groß sein, daß es zum Überspritzen kommt. Mit der Erfindung sind die maßgeblichen Parameter für die Bemessung eines kleinstmöglichen Abstandes festgelegt, nämlich Einbetten des thermisch geschwächten Längenbereichs der Borsten, Vorsorge für eine einwandfreie Entlüftung der Form im Bereich der Einbettung zur Vermeidung von Kavernen, Lunker etc. und Erzielung einer glatten Oberfläche am Borstenträger durch Vermeidung des Überspritzens. Dabei ist mit der Erfindung insbesondere erkannt worden, daß das in der Einspritztechnologie der jüngeren Zeit geforderte Abdichten der Bündelkanäle entbehrlich ist.

Praktische Versuche haben ergeben, daß bei üblichen Borstenwaren die erfindungsgemäß vorgeschriebenen Parameter dann eingehalten werden, wenn das Bündel in den Kanal derart positioniert und fixiert wird, daß der Abstand der Verdickung von der Mündung des Kanals das Zwei- bis Fünffache des Durchmessers der Borsten beträgt. Dies läßt sich zahlenmäßig dahingehend eingrenzen, daß der Abstand bei Borstendurchmessern bis 0,3 mm zwischen 0,1 bis 1,0 mm, vorzugsweise bis 0,4 mm, bei größeren Durchmessern zwischen 0,5 bis 2,0 mm, vorzugsweise bis 1,5 mm eingestellt wird.

Um einerseits das Entlüften der Form zu gewährleisten, andererseits das Überspritzen zu vermeiden, werden gemäß einem Ausführungsbeispiel Bündel verwendet, bei denen die Summe der Querschnitte der Borsten eines Bündels zwischen 50 und 75% des Querschnitts des das Bündel führenden Kanals beträgt.

Bei dieser Ausbildung sind die Kapillaren zwischen den Borsten einerseits und zwischen diesen und der Kanalwandung andererseits ausreichend groß, um ein einwandfreies Entlüften der Form, insbesondere im Bereich der an den Verdickungen vorhandenen Hinterschnitte zu ermöglichen, andererseits aber eng genug, um die Kunststoffschmelze, die durch geeignete technologische Maßnahmen im Bereich des Bündelansatzes möglichst schnell zum Erstarren gebracht wird (Führung und Leistung der Kühlung der Spritzgießform, Materialauswahl im Bereich der Bündelkanäle, Führung von Einspritzgeschwindigkeit und Druck etc.), am Eindringen in die Borstenkapillaren bzw. den Kanal zu hindern.

Die erfindungsgemäß einzuhaltenden Parameter lassen sich durch eine andere praktikable Größe festlegen, indem das Bündel im Kanal derart positioniert und fixiert wird, daß der Abstand der Verdickung von der Mündung des Kanals im Bereich von 20 bis 50% des Durchmessers des Kanals liegt, wobei der beim zuvor genannten Ausführungsbeispiel wiedergegebene Füllungsgrad des Kanals zusätzlich verwirklicht sein sollte.

In der praktischen Ausführung des Verfahrens wird vorzugsweise so vorgegangen, daß das Bündel in dem Kanal soweit hineingeführt wird, daß sein Ende einen Abstand "A" von der Mündung des Kanals aufweist, anschließend auf einer Länge "L" < "A" aufgeschmolzen wird, so daß die Verdickung einen Abstand "B" von der Mündung des Kanals aufweist, und daß das Bündel anschließend in den Kanal zurückgezogen wird, bis die Verdickung den gewünschten Abstand "C" < "B" von der Mündung des Kanals erreicht.

Mit dieser Verfahrensweise läßt sich der gewünschte und kleinstmögliche Abstand besonders einfach und exakt einstellen. Dabei ist es grundsätzlich möglich, die die Bündel führenden Kanäle direkt in der einen Formhälfte der Spritzgießform vorzusehen und die Verdickung am Bündelende bei geöffneter Spritzgießform auszubilden. Vorzugsweise ist jedoch vorgesehen, daß das Bündel in einer den Kanal aufweisenden Halterung außerhalb der Spritzgießform an seinem Ende zu der Verdickung aufgeschmolzen und positioniert wird und anschließend die Halterung mit dem positionierten Bündel unter Ergänzung der einen Formhälfte an die Spritzgießform dichtend angeschlossen wird. Diese Verfahrenstechnik hat den Vorteil, daß die vorbereitenden Arbeiten am Bündel nicht an der sich im Dauerbetrieb aufheizenden Spritzgießform, sondern außerhalb derselben stattfinden. Damit wird zum einen eine Schädigung der Borsten allein durch die Abstrahlung der Spritzgießform vermieden, andererseits für eine schnelle Erstarrung der Kunststoffschmelze am Bündelende und im Bereich der Halterung gesorgt und somit dem Überspritzen vorgebeugt.

Dieses Verfahren läßt sich noch dadurch optimieren, daß die Halterung auf Ihrem Transportweg von und zu der Spritzgießform und gegebenenfalls das Bündel nach dem Ausbilden der Verdickung gekühlt werden, so daß die Bündel und die Halterung stets auf einer gleichbleibend niedrigen und kontrollierbaren Temperatur gehalten und in diesem Zustand der Spritzgießform zugeführt werden können.

Die Erfindungsaufgabe läßt sich bei dem eingangs genannten Verfahren auch dadurch lösen, daß nach dem Aufschmelzen des Bündelendes die sich bildende noch weichplastische Masse in Richtung der Borsten derart umgeformt wird, daß sie zwischen diese und entlang des Umfangs des Bündels verdrängt wird und die Borsten zumindest auf einem Teil ihres beim Aufschmelzen der Monofile durch molekulare Reorientierung thermisch geschwächten Längenbereichs umschließt.

Bei diesem Verfahren wird zumindest ein Teil des geschwächten Längenbereichs der Borsten unmittelbar von dem Borstenmaterial durch Umformen der noch weichplastischen Verdickung eingebettet und stabilisiert. Dadurch kann die gesamte Einbettungslänge von Bündel und Verdickung weiter minimiert werden.

Dieses Verfahren läßt sich noch dahingehend abwandeln, daß das Bündel soweit in den Kanal hineingeführt wird, daß nach dem Ausbilden und Umformen der Verdickung diese einen solchen Abstand von der Mündung des Kanals aufweist, daß der beim Aufschmelzen der Monofile durch molekulare Reorientierung geschwächte Längenbereich der Monofile teils von der beim Umformen der Verdickung verdrängten Masse aus den aufgeschmolzenen Monofilen, teils von der eingespriten Kunststoffschmelze des Borstenträgers umschlossen wird, ohne daß die Kunststoffschmelze in den Kanal eindringt.

Die von der verdrängten Masse der Verdickung nicht umschlossene Teillänge der Borsten braucht bei diesem Verfahren nur noch so bemessen zu sein, daß die gewünschte Entlüftung im Bereich der Bündel durch den Kanal gegeben ist bzw. ein Überspritzen vermieden wird.

Das einwandfreie Entlüften des Formraums, insbesondere im Bereich der Bündelansätze, wie auch die Vermeidung des Überspritzens wird gemäß einem weiteren Ausführungsbeispiel dadurch unterstützt, daß die Einspritzgeschwindigkeit von einem Maximalwert zu Beginn des Einspritzens bis zum vollständigen Füllen der Spritzgießform abgesenkt wird und daß der üblicherweise aufgebrachte Nachdruck von einem zunächst niedrigen Wert auf einen höheren Wert angehoben wird.

In gleicher Richtung wirkt die in weiterer Ausführung der Erfindung vorgesehene Maßnahme, daß die den Kanal aufweisende Formhälfte im Bereich der Mündung des Kanals eine zu diesem konzentrische Kontur aufweist, die im Bereich zwischen der Verdickung und der Mündung des Kanals durch eine Verlängerung des Fließwegs der Kunststoffschmelze zu einer Verzögerung ihrer Fließgeschwindigkeit führt und die Abkühlung der Kunststoffschmelze in diesem Bereich beschleunigt.

Eine Verlängerung des Fließwegs im Bereich der Bündel läßt sich konstruktiv dadurch erreichen, daß die Kontur von einem den Kanal in den Formraum verlängernden Kragen gebildet wird, oder dadurch, daß die Kontur von einer Vertiefung in der Formwandung gebildet wird und die Mündung des Kanals sich am Boden der Vertiefung befindet.

Mit der erfindungsgemäßen Verfahrenstechnik lassen sich nicht nur qualitativ hochstehende Produkte, insbesondere auch Zahnbürsten, bei geringster Ausschußrate herstellen, sondern auch eine Spritzgießtechnik anwenden, die bekanntermaßen zu qualitativ hervorragenden Bürsten, was die allgemeine Oberflächenbeschaffenheit des Griffs betrifft, anwenden. Es kann nämlich beispielsweise eine Zahnbürste im Bereich des Griffendes angespritzt werden, was normalerweise einen hohen Spritzdruck erforderlich macht, um den Formraum einwandfrei auszufüllen. Dieser hohe Spritzdruck führt wiederum zu einem entsprechenden Druckaufbau in der im Formraum enthaltenen Luft, die aber durch die erfindungsgemäße Einstellung des Abstandes der Verdickung vom Mündungsrand des Kanals einwandfrei abgeführt wird. Es kann dabei insbesondere auch auf sonstige Entlüftungsmaßnahmen, sei es über die Trennflache der Spritzgießform oder über zusätzliche Entlüftungskanäle verzichtet werden, die Spritzgießform also so dicht abgeschlossen werden, daß auch in der Trennfläche keine Grate entstehen und ferner zusätzliche Anspritzpunkte auf der Borstenträgeroberfläche entfallen.

Nachstehend sind Ausführungsbeispiele des erfindungsgemäßen Verfahrens anhand der schematischen Zeichungen näher erläutert. In der Zeichnung zeigen:
- Figur 1 bis 3: die Herstellung der Verdickung mit schematischer Andeutung der hierfür notwendigen Vorrichtung in Figuren 1a, 2a und 3a und einer Vergrößerung des Arbeitsbereichs in den Figuren 1b, 2b und 3b;
- Figur 4: eine schematische Ansicht einer Spritzgießform beim Abspritzen;
- Figur 5: eine schematische Darstellung beim Entformen der Bürste;
- Figur 6 und 7: eine andere Variante des Verfahrens zur Herstellung der Verdikkung mit den notwendigen Vorrichtungsteilen in den Figuren 6a und 7a und eine jeweilige Vergrößerung des Arbeitsbereichs in den Figuren 6b und 7b;
- Figuren 8 bis 10: andere Varianten des Verfahrens in schematischer Darstellung.

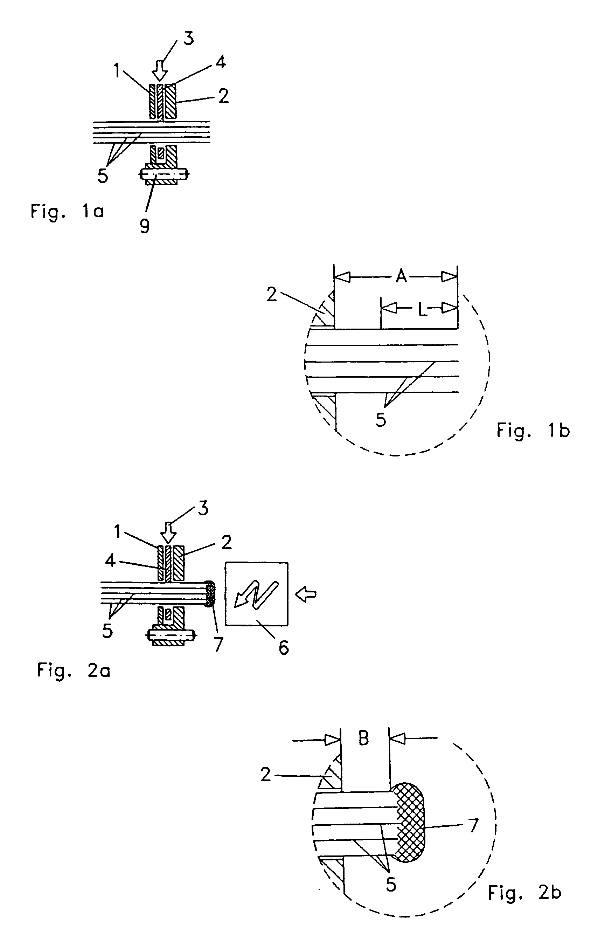

In den Figuren 1 a bis 3a sind zwei mit Abstand voneinander angeordnete Lochplatten 1 und 2 einer Bündelkassette wiedergegeben, zwischen denen eine gemäß Richtungspfeil 3 verschiebbare Klemmplatte 4 angeordnet ist. Das Lochmuster der Lochplatten 1 und 2 und der Klemmplatte 4 entspricht der Bündelanordnung des herzustellenden Borstenbesatzes.

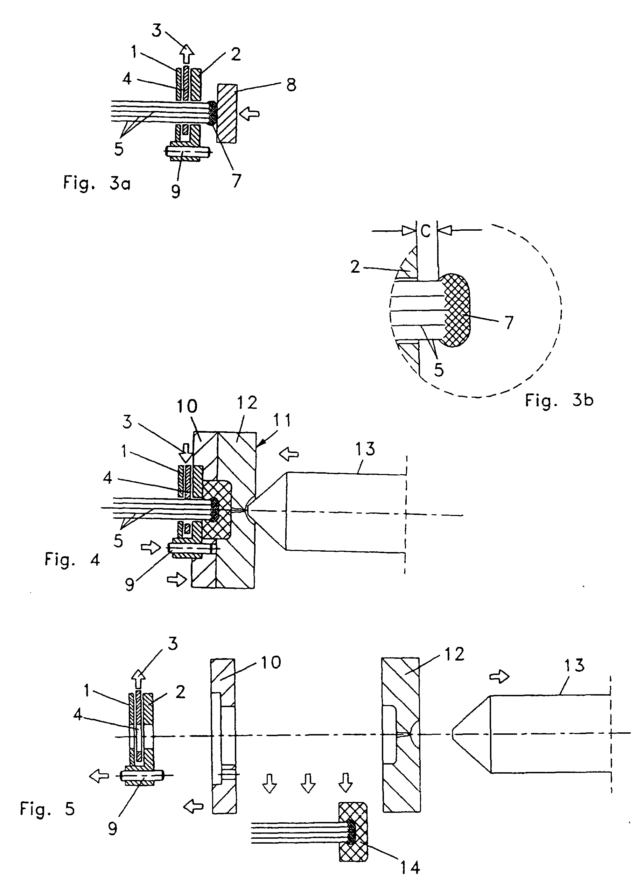

Bei geöffneter Klemmplatte 4 werden die Borsten 5 in Form eines Bündels, und zwar als Kurzschnitte oder vom Endlosstrang, in die Löcher der Führungsplatte 1, 2 und der Klemmplatte 4 eingeführt, bis sie die Lochplatte 2 um ein gewisses Maß überragen. Anschließend wird vor das überragende Bündelende eine Heizeinrichtung 6 (Figur 2a) gefahren, die die Borstenenden berührungslos erwärmt und aufschmilzt, so daß sich eine Verdickung ausbildet (Figur 2a). Anschließend wird die Klemmplatte 4 in die Öffnungsstellung gefahren (Figur 3a) und das Bündel durch einen auf die Verdickung 7 wirkenden Schieber 8 positioniert und daraufhin die Klemmplatte in die nicht gezeigte Schließstellung gefahren.

In der vergrößerten Darstellung gemäß Figur 1b ist erkennbar, daß beim Zuführen des Bündels die Borsten 5 die Lochplatte um das Maß "A" überragen. Beim Aufschmelzen der Borstenenden gemäß Figur 2a werden die Borsten auf der Länge "L" (Figur 1b) in den Schmelzzustand überführt, so daß die sich dabei ausbildende Verdickung 7 einen minimalen Abstand "B" von der Lochplatte 2 aufweist. Mittels des Schiebers 8 (Figur 3a) wird dann die Verdickung 7 in Richtung auf die Lochplatte 2 soweit verschoben, bis sie von deren Oberfläche den gewünschten Abstand "C" aufweist (Figur 3b).

Das solchermaßen eingespannte Bündel wird dann mittels der von den Lochplatten 1, 2 und der Klemmplatte 4 gebildeten Kassette und mittels einer Zentrierung 9 mit der einen Formhälfte 10 einer Spritzgießform 11 in Verbindung gebracht, wobei die Kassette das Formnest dieser Formhälfte 10 abschließt. Nach Schließen der Form durch die zweite Formhälfte 12 wird mittels des Spritzkopfs 13 die Kunststoffschmelze für den Borstenträger eingespritzt, die die in den Formraum hineinragenden Bündelenden, also die Verdickung 7 und die Borsten auf der Länge "C" (Figur 3b) umfließt. Die verdrängte Luft entweicht durch die den Bündelkanal bildenden Löcher der Lochplatte 2 und die Borsten 5 werden auf der Länge "C" von der Kunststoffschmelze umschlossen, ohne daß diese in den Bündelkanal der Lochplatte 2 eindringt. Ist der Borstenträger bzw. der Griff der Bürste ausreichend abgekühlt, wird die aus den Lochplatten 1, 2 und der Klemmplatte 4 bestehende Kassette weggefahren, die Formhälfte 10 abgehoben und die fertige Bürste 14 ausgeworfen.

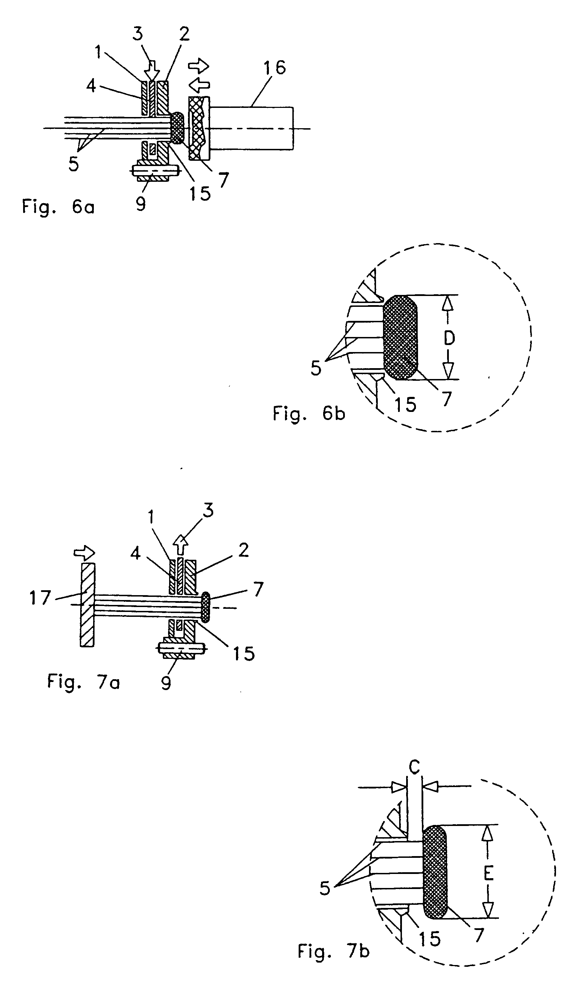

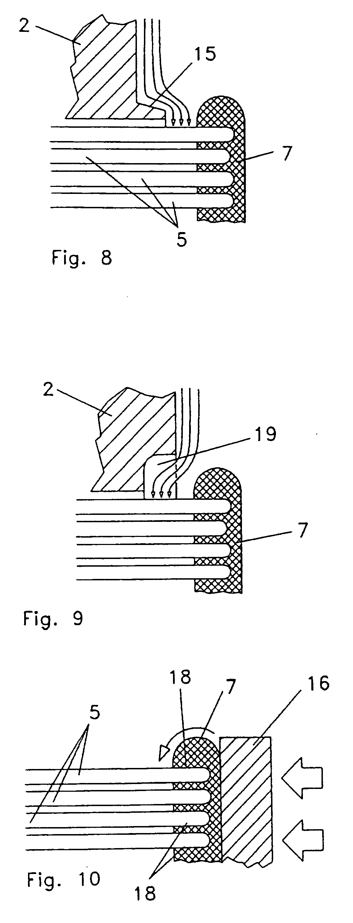

Bei dem Ausführungsbeispiel gemäß Figur 6a weist die Lochplatte 2 einen in den Formrahmen hineinragenden, konzentrischen Kragen 15 auf. Die Borsten 5 werden in gleicher Weise in die von den Lochplatten 1, 2 und der Klemmplatte 4 in deren geöffneter Stellung eingeführt, wie dies mit Bezug auf Figur 1a beschrieben worden ist. Die die Lochplatte 2 überragenden Borstenenden werden mittels einer kombinierten Heiz- und Formeinrichtung 16 aufgeschmolzen und die Schmelze an dem Kragen 15 angeformt, so daß wiederum eine Verdickung 7 entsteht, deren Durchmesser "D" nach dem Aufschmelzen zunächst wenig größer ist als der Bündeldurchmesser (Figur 6b) und durch das Anformen auf den Durchmesser "E" vergrößert wird. Nach dem Anformen werden die Borsten 5 bzw. das von ihnen gebildete Bündel bei geöffneter Klemmplatte 3 mittels des Schiebers 17 in Richtung zum Formraum verschoben, bis die Verdickung 7 den Abstand "C" (s. Figur 3b) von dem Kragen 15 der Lochplatte 2 aufweist (Figur 7b). Das Anformen der noch weichplastischen Schmelze der Verdickung 7 kann auch in der Weise erfolgen, daß die noch weichplastische Masse zwischen die durch die thermische Behandlung geschwächten Borsten sowie am äußeren Umfang des Bündels in Richtung der Borsten verdrängt wird, wie dies in den Figuren 8 bis 10 gezeigt ist. Dadurch wird zumindest ein Teil der thermisch geschwächten Länge der Borsten 5 vom Borstenmaterial selbst eingebettet, wie dies in den Bereichen 18 in Figur 10 erkennbar ist.

Um ein Überspritzen zu vermeiden und im Bereich des Bündelansatzes eine schnellere Abkühlung der Kunststoffschmelze des Borstenträgers zu erreichen, kann die Formhälfte bzw. die Lochplatte 2 im Bereich des Bündelkanals eine den Fließweg verlängernde, konzentrische Kontur, z.B. den Kragen 15 (Figur 8) oder auch eine entsprechende Vertiefung 19 aufweisen, an deren Boden dann der Bündelkanal ausmündet.

## Patentansprüche

1. Verfahren zum Herstellen von Borstenwaren, bestehend aus einem Borstenträger aus Kunststoff und wenigstens einem an diesem befestigten Borstenbündel aus verstreckten und stabilisierten Kunststoff-Monofilen, indem das Borstenbündel in einem Kanal einer Formhälfte einer Spritzgießform für den Borstenträger geführt, sein in den Formraum der Spritzgießform hineinragendes Ende zu einer mit Abstand von der Mündung des Kanals angeordneten Verdickung, deren Querschnitt größer ist als der des Bündels oder einer Gruppe von Bündeln, aufgeschmolzen und nach Schließen der Spritzgießform und Einspritzen der Kunststoffschmelze für den Borstenträger in diesen eingebettet wird, **dadurch gekennzeichnet, daß** der Abstand der Verdickung des Bündels von der Mündung des Kanals so eingestellt wird, daß einerseits die beim Einspritzen der Kunststoffschmelze im Formraum verdrängte Luft und eventuelle Entgasungsprodukte aus der Kunststoffschmelze durch den Kanal abgeführt werden, andererseits wenigstens der beim Aufschmelzen der Monofile durch molekulare Reorientierung thermisch geschwächte Längenbereich der Monofile von der Kunststoffschmelze umschlossen wird, ohne daß diese in den Kanal eindringt.

2. Verfahren nach Anspruch 1, **dadurch gekennzeichnet, daß** das Bündel im Kanal derart positioniert und fixiert wird, daß der Abstand der Verdickung von der Mündung des Kanals das Zweibis Fünffache des Durchmessers der Borsten beträgt.

3. Verfahren nach Anspruch 1 oder 2, **dadurch gekennzeichnet, daß** das Bündel im Kanal derart positioniert und fixiert wird, daß der Abstand der Verdickung von der Mündung des Kanals in Abhängigkeit vom Durchmesser der Borsten 0,1 bis 2,0 mm beträgt.

4. Verfahren nach Anspruch 3, **dadurch gekennzeichnet, daß** der Abstand der Verdickung bei Borstendurchmessern bis 0,3 mm zwischen 0,1 bis 1,0 mm, vorzugsweise bis 0,4 mm, bei größeren Durchmessern zwischen 0,5 bis 2,0 mm, vorzugsweise bis 1,5 mm eingestellt wird.

5. Verfahren nach einem der Ansprüche 1 bis 4, **dadurch gekennzeichnet, daß** das Bündel im Kanal derart positioniert und fixiert wird, daß der Abstand der Verdickung von der Mündung des Kanals im Bereich von 20 bis 50% des Durchmessers des Kanals liegt.

6. Verfahren nach einem der Ansprüche 1 bis 5, **dadurch gekennzeichnet, daß** Bündel verwendet werden, bei denen die Summe der Querschnitte der Borsten eines Bündels zwischen 60 und 75% des Querschnittes des das Bündel führenden Kanals beträgt.

7. Verfahren nach einem der Ansprüche 1 bis 6, **dadurch gekennzeichnet, daß** das Bündel in den Kanal soweit hineingeführt wird, daß sein Ende einen Abstand "A" von der Mündung des Kanals aufweist, anschließend auf einer Länge "L" < "A" aufgeschmolzen wird, so daß die Verdickung einen Abstand "B" von der Mündung des Kanals aufweist, und daß das Bündel anschließend in den Kanal zurückgezogen wird, bis die Verdickung den gewünschten Abstand "C" < "B" von der Mündung des Kanals erreicht.

8. Verfahren nach einem der Ansprüche 1 bis 7, **dadurch gekennzeichnet, daß** das Bündel in einer den Kanal aufweisenden Halterung außerhalb der Spritzgießform an seinem Ende zu der Verdickung aufgeschmolzen und positioniert wird und anschließend die Halterung mit dem positionierten Bündel unter Ergänzung der einen Formhälfte an die Spritzgießform dichtend angeschlossen wird.

9. Verfahren nach einem der Ansprüche 1 bis 8, **dadurch gekennzeichnet, daß** die Halterung auf ihrem Transportweg von und zu der Spritzgießform und gegebenenfalls das Bündel nach dem Ausbilden der Verdickung gekühlt werden.

10. Verfahren nach einem der Ansprüche 1 bis 9, **dadurch gekennzeichnet, daß** nach dem Aufschmelzen des Bündelendes die sich bildende noch weichplastische Masse in Richtung der Borsten derart umgeformt wird, daß sie zwischen diese und entlang des Umfangs des Bündels verdrängt wird und die Borsten zumindest auf einem Teil ihres beim Aufschmelzen der Monofile durch molekulare Reorientierung thermisch geschwächten Längenbereichs umschließt.

11. Verfahren nach einem der Ansprüche 1 bis 10, **dadurch gekennzeichnet, daß** das Bündel soweit in den Kanal hineingeführt wird, daß nach dem Ausbilden und Umformen der Verdickung diese einen solchen Abstand von der Mündung des Kanals aufweist, daß der beim Aufschmelzen der Monofile durch molekulare Reorientierung geschwächte Längenbereich der Monofile teils von der beim Umformen der Verdickung verdrängten Masse aus den aufgeschmolzenen Monofilen, teils von der eingespritzten Kunststoffschmelze des Borstenträgers umschlossen wird, ohne daß die Kunststoffschmelze in den Kanal eindringt.

12. Verfahren nach einem der Ansprüche 1 bis 11, **dadurch gekennzeichnet, daß** die Einspritzgeschwindigkeit von einem Maximalwert zu Beginn des Einspritzens bis zum vollständigen Füllen der Spritzgießform abgesenkt wird und daß der üblicherweise aufgebrachte Nachdruck von einem zunächst niedrigen Wert auf einen höheren Wert angehoben wird.

13. Verfahren nach einem der Ansprüche 1 bis 12, **dadurch gekennzeichnet, daß** die den Kanal aufweisende Formhälfte im Bereich der Mündung des Kanals eine zu diesem konzentrische Kontur aufweist, die im Bereich zwischen der Verdickung und der Mündung des Kanals durch eine Verlängerung des Fließwegs der Kunststoffschmelze zu einer Verzögerung ihrer Fließgeschwindigkeit führt und die Abkühlung der Kunststoffschmelze in diesem Bereich beschleunigt.

14. Verfahren nach Anspruch 13, **dadurch gekennzeichnet, daß** die Kontur von einem den Kanal in den Formraum verlängernden Kragen gebildet wird.

15. Verfahren nach Anspruch 13, **dadurch gekennzeichnet, daß** die Kontur von einer Vertiefung in der Formwandung gebildet wird und die Mündung des Kanals sich am Boden der Vertiefung befindet.

## Claims

1. Process for the production of brushes, comprising a plastic bristle carrier and at least one bristle bundle of stretched, stabilized plastic monofilaments fixed thereto, in that the bristle bundle is guided in a channel of a mould half of an injection mould for the bristle carrier, its end projecting into the injection mould cavity is melted to give a thickening arranged in spaced manner from the channel mouth and whose cross-section is larger than that of the bundle or a group of bundles, and after closing the injection mould and injecting the plastic melt for the bristle carrier is embedded in the latter, **characterized in that** the spacing of the bundle thickening from the channel mouth is adjusted in such a way that on the one hand the air displaced during the injecting of the plastic melt into the mould cavity and any venting products from the plastic melt are removed through the channel, and on the other at least the length area of the monofilaments thermally weakened by molecular reorientation during the melting of the monofilaments is enclosed by the plastic melt, without the latter penetrating into the channel.

2. Process according to claim 1, **characterized in that** the bundle is positioned and fixed in the channel in such a way that the spacing of the thickening from the channel mouth is two to five times the diameter of the bristles.

3. Process according to claim 1 or 2, **characterized in that** the bundle is so positioned and fixed in the channel that the spacing of the thickening from the channel mouth, as a function of the diameter of the bristles, is 0.1 to 2.0 mm.

4. process according to claim 3, **characterized in that** the spacing of the thickening in the case of bristle diameters up to 0.3 mm is set at between 0.1 and 1.0 mm, preferably up to 0.4 mm and with larger diameters between 0.5 to 2.0 mm, preferably up to 1.5 mm.

5. Process according to one of the claims 1 to 4, **characterized in that** the bundle is so positioned and fixed in the channel that the spacing of the thickening from the channel mouth is in the range of 20 to 50% of the channel diameter.

6. Process according to one of the claims 1 to 5, **characterized in that** bundles are used, in which the sum of the cross-sections of the bristles of a bundle is between 60 and 70% of the cross-section of the bundle-guiding channel.

7. Process according to one of the claims 1 to 6, **characterized in that** the bundle is introduced into the channel to such an extent that its end has a spacing A from the channel mouth, is then melted to a length L < A, so that the thickening has a spacing B from the channel mouth, and that the bundle is subsequently retracted into the channel until the thickening reaches the desired spacing C < B from the channel mouth.

8. Process according to one of the claims 1 to 7, **characterized in that** the bundle end is melted to the thickening in a channel-possessing holder outside the injection mould and positioned and subsequently the holder with the positioned bundle is sealingly connected whilst supplementing one mould half to the injection mould.

9. Process according to one of the claims 1 to 8, **characterized in that** on its conveying path from and to the injection mould, the holder and optionally the bundle, following the formation of the thickening, undergo cooling.

10. Process according to one of the claims 1 to 9, **characterized in that** following the melting of the bundle end, the still soft plastic mass being formed is so shaped in the direction of the bristles that it is displaced between the latter and along the bundle circumference and surrounds the bristles at least along part of their length area thermally weakened by molecular reorientation during the melting of the monofilaments.

11. Process according to one of the claims 1 to 10, **characterized in that** the bundle is introduced into the channel to such an extent that, following the formation and shaping of the thickening, the latter has such a spacing from the channel mouth, that the length area of the monofilaments weakened by molecular reorientation during the melting of the monofilaments is partly surrounded by the mass from the melted monofilaments displaced during the shaping of the thickening and partly by the injected plastic melt of the bristle carrier, without the plastic melt penetrating the channel.

12. Process according to one of the claims 1 to 11, **characterized in that** the injection rate is lowered from a maximum value at the start of injection up to the complete filling of the injection mould and that the conventionally applied subsequent pressure is raised from an initially low value to a higher value.

13. Process according to one of the claims 1 to 12, **characterized in that** the channel-possessing mould cavity has in the area of the channel opening a contour concentric to the latter and which in the area between the thickening and the channel mouth leads, as a result of a lengthening of the plastic melt flow path, to a slowing down of its flow rate and speeds up in this area the cooling of the plastic melt.

14. Process according to claim 13, **characterized in that** the contour is formed by a collar extending the channel into the mould cavity.

15. Process according to claim 13, **characterized in that** the contour is formed by a depression in the mould wall and the channel mouth is located in the bottom of the depression.

## Revendications

1. Procédé de fabrication de brosses, comprenant un support de brosse en matière plastique et au moins un faisceau de poils fixé à celui-ci consistant en des monofils en matière synthétique étirés et stabilisés, procédé selon lequel le faisceau de poils est guidé dans un canal d'un demi-moule d'un moule d'injection du support de brosse, son extrémité en saillie à l'intérieur du volume du moule d'injection est fondue en un renflement situé à distance de l'orifice du canal, renflement dont la section est supérieure à celle du faisceau ou d'un groupe de faisceaux, et est noyée en fond de moule dans le support de brosse après fermeture du moule d'injection et injection de la matière plastique fondue pour le support de brosse, **caractérisé en ce que** la distance entre le renflement du faisceau et l'orifice du canal est réglée de façon telle que d'une part, l'air chassé dans l'espace intérieur du moule lors de l'injection de la matière plastique fondue et d'éventuels produits de dégazage dégagés par la matière plastique fondue sont évacués par le canal, et d'autre part, qu'au moins la zone longitudinale des monofils affaiblie thermiquement par réorientation moléculaire lors de leur fusion est enrobée par la matière plastique fondue, sans que celle-ci pénètre dans le canal.

2. Procédé selon la revendication 1, **caractérisé en ce que** le faisceau est positionné dans le canal et fixé de telle façon que la distance entre le renflement et l'orifice du canal correspond au double ou au quintuple de la section des poils.

3. Procédé selon la revendication 1 ou 2, **caractérisé en ce que** le faisceau est positionné dans le canal et fixé de telle façon que la distance entre le renflement et l'orifice du canal correspond à 0,1 à 2,0 mm en fonction de la section des poils.

4. Procédé selon la revendication 3, **caractérisé en ce que** la distance du renflement est réglée entre 0,1 et 1,0 mm - de préférence jusqu'à 0,4 mm - pour des sections de poils allant jusqu'à 0,3 mm, et entre 0,5 et 2,0 mm, de préférence jusqu'à 1,5 mm - pour des sections supérieures.

5. Procédé selon l'une quelconque des revendications 1 à 4, **caractérisé en ce que** le faisceau est positionné dans le canal et fixé de telle façon que la distance entre le renflement et l'orifice du canal se situe dans une plage comprise entre 20 et 50 % de la section du canal.

6. Procédé selon l'une quelconque des revendications 1 à 5, **caractérisé en ce que** l'on utilise des faisceaux dans lesquels le total des sections des poils d'un faisceau correspond à 60 à 75 % de la section du canal guidant le faisceau.

7. Procédé selon l'une quelconque des revendications 1 à 6, **caractérisé en ce que** le faisceau est introduit à l'intérieur du canal jusqu'à ce que son extrémité soit située à une distance "A" de l'orifice du canal, qu'il est fondu sur une distance "L" < "A" de sorte que le renflement soit situé à une distance "B" de l'orifice du canal.

8. Procédé selon l'une quelconque des revendications 1 à 7, **caractérisé en ce que** le faisceau est fondu à son extrémité en un renflement et positionné dans un support comportant le canal endehors du moule d'injection, et **en ce qu'**ensuite le support dans lequel est positionné le faisceau est relié de façon étanche au moule par réalisation du premier demi-moule.

9. Procédé selon l'une quelconque des revendications 1 à 8, **caractérisé en ce que** durant son transport aller-retour vers le moule, le support est refroidi, de même que, le cas échéant, le faisceau après réalisation du renflement.

10. Procédé selon l'une quelconque des revendications 1 à 9, **caractérisé en ce qu'**après la fusion de l'extrémité du faisceau, la masse encore souple qui se forme est déformée de telle manière en direction des poils qu'elle est refoulée entre ceux-ci et le long du périmètre du faisceau et qu'elle enrobe les poils au moins sur une partie de leur zone longitudinale thermiquement affaiblie par réorientation moléculaire lors de la fusion des monofils.

11. procédé selon l'une quelconque des revendications 1 à 10, **caractérisé en ce que** l'on introduit le faisceau dans le canal aussi loin qu'après réalisation et déformation du renflement, celui-ci présente une distance telle par rapport à l'orifice du canal que la zone longitudinale des monofils affaiblie par réorientation moléculaire lors de la fusion ce ceux-ci est enrobée pour partie par la masse provenant des monofils fondus refoulée lors de la déformation du renflement, pour partie par la matière plastique fondue du support de brosse, sans que la matière plastique fondue pénètre dans le canal.

12. Procédé selon l'une quelconque des revendications 1 à 11, **caractérisé en ce que** la vitesse d'injection est réduite à partir d'une valeur maximale de début d'injection jusqu'au remplissage complet du moule, et **en ce que** le maintien en pression généralement exercé est augmenté d'une valeur d'abord basse à une valeur plus élevée.

13. Procédé selon l'une quelconque des revendications 1 à 12, **caractérisé en ce que** le demi-moule comportant le canal présente dans la zone de l'orifice du canal un profil concentrique à celui-ci conduisant dans la zone entre le renflement et l'orifice du canal à un ralentissement de la vitesse d'écoulement de la matière plastique fondue par allongement de son trajet d'écoulement et accélère dans cette zone le refroidissement de cette matière.

14. Procédé selon la revendication 13, **caractérisé en ce que** le profil est constitué par un col prolongeant le canal dans l'espace intérieur du moule.

15. Procédé selon la revendication 13, **caractérisé en ce que** le profil est constitué par un évidement dans la paroi du moule et **en ce que** l'orifice du canal est situé au fond de l'évidement.
